# EUROPEAN PATENT SPECIFICATION

(11) **EP 2 398 712 B1**
(45) Date of publication and mention of the grant of the patent: **06.10.2021**
(21) Application number: 10744218.8
(22) Date of filing: 17.02.2010
(51) Int. Cl.: B65D 1/02, B65D 81/24, C08L 67/02, C08K 5/00, C08K 5/098, B65D 85/72, B65D 23/00, C08L 77/06, C08L 23/08

(54) **BOTTLE FOR CARBONATED PASTEURIZED PRODUCTS**
FLASCHE FÜR KOHLENSÄUREHALTIGE PASTEURISIERTE PRODUKTE
BOUTEILLE POUR PRODUITS PASTEURISÉS GAZÉIFIÉS

(30) Priority: 18.02.2009 US 153498 P
(43) Date of publication of application: 28.12.2011
(73) Proprietor: Indorama Germany GmbH, 65795 Hattersheim (DE)
(72) Inventor: EMBS, Frank, Wilhelm, Charlotte NC 28210 (US)
(74) Representative: dompatent von Kreisler Selting Werner - Partnerschaft von Patent- und Rechtsanwälten mbB
(86) International application number: PCT/US2010/024402
(87) International publication number: WO 2010/096430

(56) References cited:
- WO-A1-01/34479
- WO-A1-99/15432
- KR-B1- 100 495 207
- US-A1- 2002 037 377
- US-A1- 2002 146 527
- US-A1- 2002 155 236
- US-A1- 2003 012 896
- US-A1- 2003 068 455
- US-A1- 2004 074 904
- US-A1- 2004 142 129
- US-A1- 2005 089 658
- US-A1- 2006 029 822
- US-A1- 2006 128 861
- US-A1- 2007 154 668
- US-A1- 2008 169 590
- US-A1- 2008 171 169
- US-A1- 2008 255 280
- US-B1- 6 525 123
- US-B1- 7 247 390
- DATABASE WPI Week 200136 Thomson Scientific, London, GB; AN 2001-341344 XP002736629, & JP 2001 097342 A (SHOWA ALUMINUM CAN KK) 10 April 2001 (2001-04-10)

## Description

This invention relates to polyester compositions useful for the manufacturing of containers that minimizes the effect of secondary contamination during filling of carbonated pasteurized products.

Many products (e.g., fruit and vegetable juices, beer and dairy products) undergo pasteurization in order to reduce and deactivate the growth of spoilage micro-organisms in the product. Typically, the process involves heating a filled and sealed container at an elevated temperature for a time period sufficient to pasteurize the contents. Desirably, the physical stability of the bottle and the biological stability and flavor of the contents are minimally compromised, thereby increasing the shelf life.

For example, there are various organisms in these products that, while not pathological or dangerous to humans, can affect the taste and appearance of the contents if allowed to grow (primary contaminants). These products packaged in glass bottles, or metal cans, are traditionally pasteurized to achieve a long shelf life. In a conventional pasteurization process, known as 'tunnel pasteurization', water is sprayed onto a series of closely spaced packages as they move on a conveyor through a pasteurization tunnel. The temperature of the product in the containers is progressively raised to a desired level (typically 60 to 70° C), held at this temperature for a predetermined period of time, and then cooled before exiting the tunnel. The temperature and time are established to achieve a 5-log reduction in the number of viable micro-organisms. Tunnel pasteurization is capital and energy intensive.

Although these products have historically been pasteurized in glass bottles, it would be desirable to use plastic containers, e.g., containers comprising polyethylene terephthalate (PET) homopolymer or copolymers, to take advantage of PET's lighter weight and shatter resistance.

However, producing a pasteurizable plastic container that can withstand the pasteurization time/temperature profile and provide a desired shelf life, using tunnel pasteurization, is limited due to the fact that the range of temperatures encountered during pasteurization will cause a typical plastic container to undergo permanent, uncontrolled deformation (also known as creep).

The increase in carbonation pressure, in the case of carbonated liquids such as beer, increases the volume of the container, thus reducing the level of carbonation in the liquid.

Alternative, lower cost methods are generally used to pasteurize and remove the primary contaminants in food and beverages that contain micro-organisms. These methods are flash pasteurization in which the product passes through a plate or tubular heat exchanger raising its temperature to about a range of 70 to 75 <0>C for about 15 to 30 seconds prior to cooling to the filling temperature of about 1 to 2 <0>C. An alternative method is to filter the cold product through a membrane filter (ultra-filtration) that removes micro-organisms. The disadvantage of flash pasteurization or ultra- filtration is that this process is done prior to filling the container and does not kill micro-organisms (secondary contaminants) that could be introduced during filling. Therefore, a well-controlled, sterile filling and capping operation is essential to prevent reintroduction of micro-organisms. Occasionally these sterile conditions are not maintained.

US 2008/0169590 A1 discloses a blend of polyester, ionic compatibilizer, cobalt salt and partially aromatic polyamide. The compositions are used to make container (bottles of beer).

Many of the pasteurized products described above require minimum oxygen in the container to minimize the growth of any contamination. The characteristics of the container's composition required to minimize the effect of secondary contaminants on spoilage is not known. Therefore, there is a need for a polyester composition that minimizes the growth of secondary contaminants. In accordance with the present invention, it has now been found that there is a polyester bottle composition that minimizes the growth of secondary contaminants.

The present invention relates to a polyester monolayer bottle for use in filling of a carbonated pasteurized product comprising
- greater than 4 wt. % poly (meta-xylyleneadipamide), wherein the poly (meta-xylyleneadipamide) is both an oxygen scavenging component and a passive component,
- at least one ionic compatibilizer comprising a copolyester containing a metal sulfoisophthalic acid group
- and a transition metal catalyst,
wherein the oxygen scavenging component limits oxygen ingress to 1 ppm or less when measured six months after filling, and the passive component limits the carbonation loss to less than 25% when measured six months after filing.

Another embodiment of the present invention is a method comprising: forming a polyester monolayer bottle comprising greater than 4 wt. % poly (meta-xylyleneadipamide), wherein the poly (meta-xylyleneadipamide) is both an oxygen scavenging component and a passive component, at least one ionic compatibilizer comprising a copolyester containing a metal sulfoisophthalic acid group and a transition metal catalyst, wherein the oxygen scavenging component limits oxygen ingress to 1 ppm or less when measured six months after filling, and the passive component limits the carbonation loss to less than 25% when measured six months after filing.

The polyester bottle is used to minimize the growth of secondary contaminants in a carbonated pasteurized product.

The present invention can be characterized as a polyester monolayer bottle for filling of a carbonated pasteurized product comprising at least one oxygen scavenging component that limits oxygen ingress to 1 ppm or less when measured six months after filling, and at least one passive component that limits the carbonation loss to less than 25% when measured six months after filing. The oxygen ingress can be 0.02 ppm or less when measured one month after filling. The oxygen scavenging component can comprise at least one member selected from the group consisting of polymers or compounds containing allylic hydrogen, benzylic hydrogen or an ether group. For example, an oxygen scavenging component containing allylic positions such as polybutadiene-based polymers, or polyethylene/cyclohexene copolymers, or containing benzylic positions such as m-xylylamine-based polyamides, or an ether group such as copolyester ethers, or mixtures of these. The passive component can be selected from the group consisting of ethylene vinyl alcohol, polyglycolic acid and partially aromatic nylon. For example, the partially aromatic nylon can be poly (meta-xylylene adipamide) which is known commercially as MXD6. The bottle can further comprise a transition metal catalyst, for example a cobalt salt. The bottle can also further comprise an ionic compatibilizer, for example an ionomer or a sulfo-copolyester. It should be noted that MXD6 can be both an active oxygen scavenging component (in the presence of a transition metal catalyst) and a passive component.

Another embodiment of the present invention is a method as described above comprising forming a polyester bottle comprising at least one oxygen scavenging component that limits oxygen ingress to 1 ppm or less when measured six months after filling, a passive component that limits carbonation loss to less than 25% when measured six months after filling, and filling the polyester bottle with a carbonated pasteurized product. The oxygen ingress can be 0.02 ppm or less when measured one month after filling. The oxygen scavenging component can comprise at least one member selected from the group consisting of polymers or compounds containing allylic hydrogen, benzylic hydrogen or an ether group. For example, an oxygen scavenging component containing allylic positions such as polybutadiene-based polymers, or polyethylene/cyclohexene copolymers, or containing benzylic positions such as m-xylylamine- based polyamides, or an ether group such as copolyester ethers, or mixtures of these. The passive component can be selected from the group consisting of ethylene vinyl alcohol, polyglycolic acid and partially aromatic nylon. According to the invention, the partially aromatic nylon is poly (meta xylylene adipamide) which is known commercially as MXD6. The bottle can further comprise a transition metal catalyst, for example a cobalt salt. The bottle can also further comprise an ionic compatibilizer, for example an ionomer or a sulfo-copolyester. The carbonated pasteurized product can be selected from the group consisting of juice and beer.

The transition metal catalyst can be cobalt acetate, cobalt carbonate, cobalt chloride, cobalt hydroxide, cobalt naphthenate, cobalt oleate, cobalt linoleate, cobalt octoate, cobalt stearate, cobalt nitrate, cobalt phosphate, cobalt sulfate, cobalt (ethylene glycolate), and mixtures of two or more of these. As a transition metal catalyst for active oxygen scavenging, cobalt acetate or a salt of a long chain fatty acid is suitable, for example cobalt acetate, cobalt octoate or cobalt stearate.

The ionic compatibilizer can be a copolyester containing a metal sulfonate salt group. The metal ion of the sulfonate salt may be Na+, Li+, K+, Zn++, Mn++, Ca++ and the like. The sulfonate salt group is attached to an aromatic acid nucleus such as a benzene, naphthalene, diphenyl, oxydiphenyl, sulfonyldiphenyl, or methylenediphenyl nucleus. Suitably, the aromatic acid nucleus can be sulfophthalic acid, sulfoterephthalic acid, sulfoisophthalic acid, 4-sulfonaphthalene-2,7-dicarboxylic acid, and their esters. More suitably, the sulfo-monomer can be 5-sodiumsulfoisophthalic acid, 5-lithiumsulfoisophthalic acid or 5-zincsulfoisophthalic acid, or their dialkyl esters such as the dimethyl ester (SIM) and glycol ester (SIPEG). A suitable range of 5-sodiumsulfoisophthalic, 5-litriiumsulfoisophthalic or 5-zincsulfoisophthalic acid to reduce the haze of the container can be 0.1 to 2.0 mol-%.

The spoilage of beer, loss of flavor is principally due to oxygen ingress into the container causing oxidative degradation. Loss of carbonation flattens the taste of beer and protection from light is needed to minimize photo-degradation. In order to achieve long shelf life (greater than 6 months) with polyester bottles, the ingress of oxygen of about 1 ppm or less is required, also desired is a carbonation loss of less than 25%. Polyester compositions that are based on a blend of the polyester with oxidizable polymers or oxidizable compounds, and suitably a catalyst to accelerate the oxidation, have been developed to scavenge the oxygen to meet these requirements ('active oxygen scavengers'), hi addition blends with high barrier polymers such as ethylene vinyl alcohol (EVOH), polyglycolic acid and partially aromatic nylon are used ('passive barrier') can be used in a single layer for monolayer bottles, or a layer in multilayer bottles.

A study was conducted to characterize the oxygen ingress and carbon dioxide loss over a
6 month period with various polyester blends. In addition beer stored in these bottles were test tasted to determine at what time there was a significant difference in taste compared to beer stored for the same time in glass bottles.

### EXAMPLES

The oxygen scavenging copolyesters, polyamide and base polyester used were:
PolyShield® polyester resin (Invista, Germany), which is copolyester of polyethylene terephthalate (PET) with 5-sulfoisophthalatic acid and a cobalt salt to give elemental cobalt amount of 70 ppm.

Amosorb® polyester resin (ColorMatrix, USA), which is a PET copolymer containing polybutadiene segments and a cobalt salt to give elemental cobalt level of 50 ppm. Poly (meta-xylylene adipamide) (MXD6, grade 6007, Mitsubishi Gas Chemical, Japan). Standard PET bottle resin (Type 1101, Invista, Germany).

The amber colorants used were: Golden Amber-3 (0.1 %) - ColorMatrix
Ultra Amber- 1- ColorMatrix Repi 80107 (0.24 %) - Repi, Italy Repi 98947 - Repi, Italy
Bottles (1.5L) were prepared by blending the polyester bottle resin with various combinations of active oxygen scavengers and high barrier polymers developed to minimize oxygen ingress. In addition, various amber colorants were used in these polyester compositions with colorants. These were filled with 1455 g of distilled water together with 24 g citric acid and 15 g sodium bicarbonate which provided a pH of about 4.3 to simulate beer. The carbon dioxide level in the bottles was measured over a 6-month period using an Orbisphere Micro Logger, model 3654, and reported as g/1.

Another set of 1.5 L bottles were fitted with an optical-chemical sensor (PreSens OXYSens). After sterilization, these bottles were filled with beer that had been flash pasteurized by a brewery and capped with a two piece screw-type cap. Oxygen measurements were made weekly for the first 3 months, and then every second week, and reported as ppm.

The taste and visual appearance of the beer was judged on a monthly frequency by a trained panel of 8-10 persons. Glass bottles were used as the control for the oxygen ingress and carbonation loss trials, as well as the taste evaluation of the beer.

All bottles were stored at a temperature of 23<0>C and 50% relative humidity.

The compositions used for these bottles are set forth in Table 1.

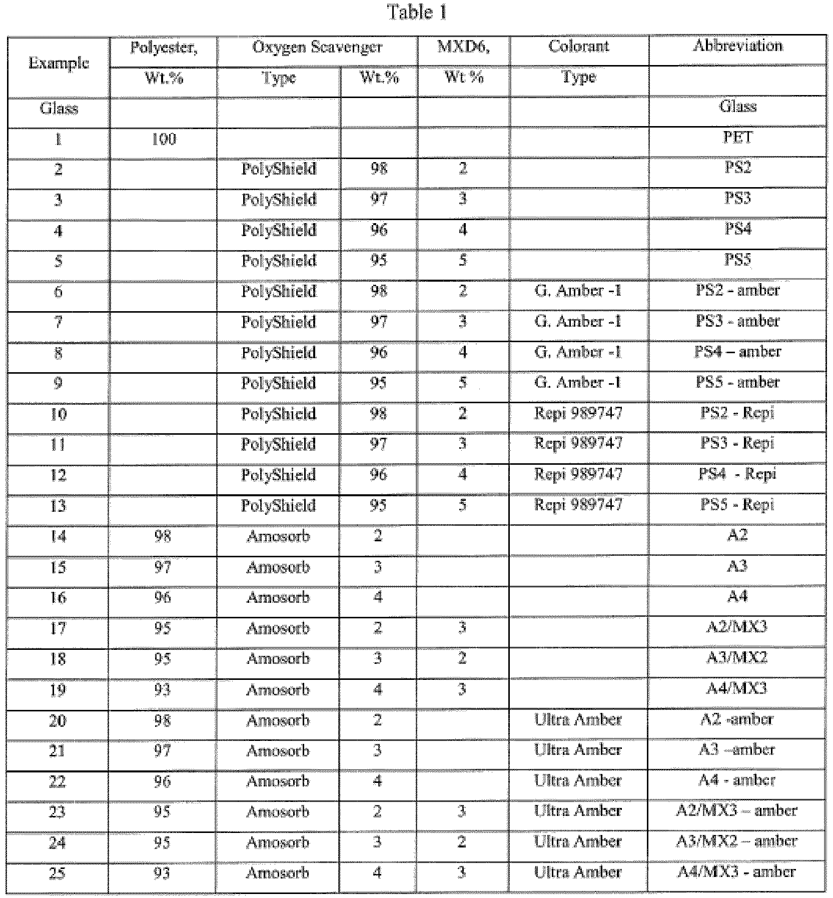

The carbon dioxide content (g/1) over time of some of these bottles was measured and is set forth in Table 2.

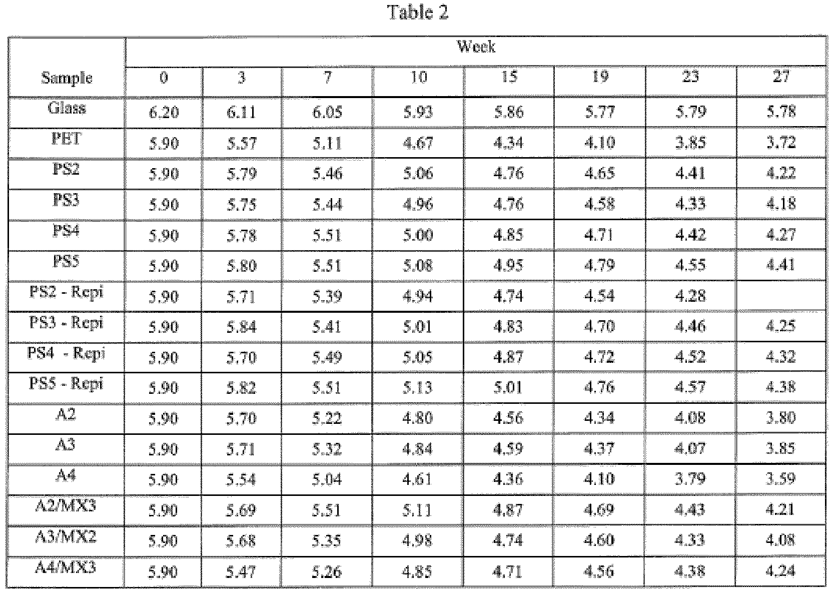

These results demonstrate that a level of greater than 3 wt. % MXD6 is required to minimize the carbonation loss to less than 25% after 6 months (CO2 content of > 4.4 g/1 on the table above after 21 weeks). The colorant did not affect the carbonation loss with time.

The oxygen ingress, ppm, over time for some of the bottles formulated with PolyShield® resin and various levels of MXD6, and colorants is set forth in Table 3.

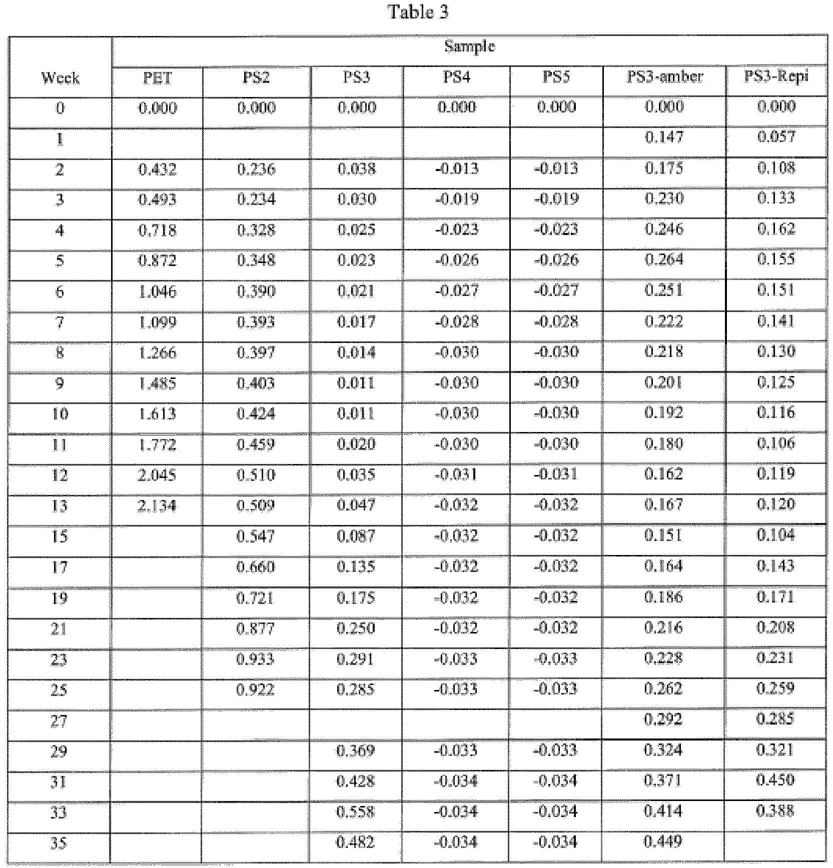

Negative values indicate that the oxygen scavenging system has removed any oxygen dissolved in the beer or present in the headspace. The oxygen ingress includes any leaks around the cap. These results demonstrate that greater than 4% of MXD6 is required to limit the oxygen ingress to less than 0.02 ppm for the first month. Additionally, after 35 weeks these bottles showed no sign of oxygen ingress. At a 3% MXD6 loading in PolyShield® resin, the colorants caused an increase in oxygen ingress for the first 4 weeks, before decreasing the oxygen content to that achieved without the colorant after about 6 months.

The oxygen ingress, ppm, with time for some of the bottles formulated with Amosorb® resin and various levels of MXD6, and colorants is set forth in Table 4.

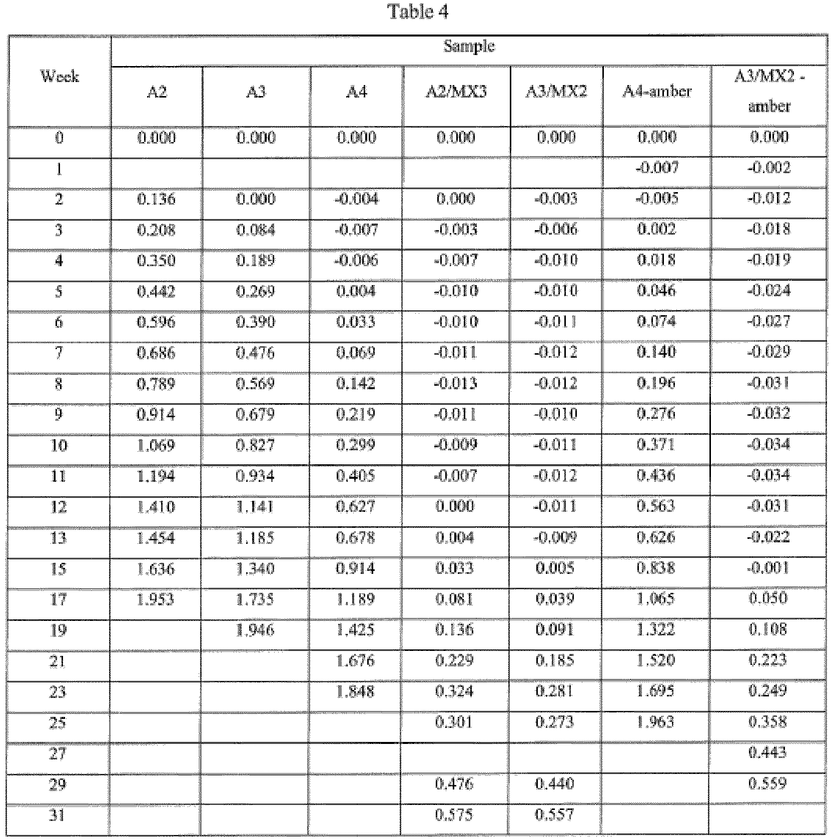

The composition containing 4% Amosorb did keep the oxygen level in the bottle below 0.02 ppm for the first month, but exponentially reached a level of 0.5 ppm within 2 months. A composition of 2% Amosorb and 3% MXD6, and 3% Amosorb and 2% MXD6 did provide low oxygen ingress and delayed the rapid increase in oxygen ingress for 15 weeks. The Ultra Amber- 1 colorant did not deactivate the oxygen scavenging rate when used with the same composition.

Sensory tasting of the beer was conducted after every month using beer filled at the same time in glass bottles as the reference. The panel was charged with noting when a beer stored in the polyester bottles had a difference in taste, especially with respect to the presence of oxidation of the beer. The results regarding the length of time before a statistical difference in taste was noted are summarized in Table 5.

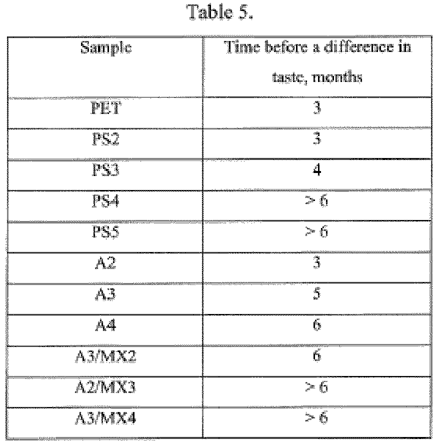

Compositions that contained greater than 4% MXD6, and the compositions with Amosorb with greater than 3% MXD6, prevented the beer from oxidizing to an extent to change the taste up to 6 months. These compositions are those that exhibited low oxygen ingress (less than about 0.02 ppm in the first month), and a level of less than 1 ppm for 6 months. After 3 months there were visible contaminants in the bottom of some of those bottles in which the beer oxidized quickly, i.e. did not pass the sensory testing before 6 months. On opening theses bottles a higher carbon dioxide pressure was noted, indicating the growth of secondary contaminates. On analysis, the following micro-organisms were detected in the contaminated beer: Saccharomyces diastaticus, micrococcus spec, and other foreign yeasts and molds.

In order to prevent the growth of foreign micro-organisms during filling of beer, polyester bottles should exhibit low oxygen ingress, especially in the first month, for example less than 0.02 ppm. The oxygen ingress, for a given bottle shelf life, should not exceed about 1 ppm to prevent a change in taste. In addition the carbonation loss should be less than 25% at the end of the given shelf life.

Polyester bottles containing both an active oxygen scavenging compound or polymer and a polymer having high gas barrier give the correct balance of gas permeability (low oxygen ingress and carbonation loss) to achieve a shelf life of at least 6 months. These compositions have the added advantage of preventing the growth of foreign micro-organisms (secondary contaminants) during the bottle filling operation.

For packaging of non-carbonated beverages, and other pasteurized products, low oxygen ingress into the polyester container is also required during the first month to extend the shelf life of the product.

From the information above it can be determined that secondary contaminants will start in the first few weeks unless the initial oxygen level is reduced to less than 0.02 ppm during this initial time, and maintained at about 1 ppm or less for the 6 month period. This requirement can be achieved by a polyester composition that provides a passive and an active barrier to oxygen.

A passive barrier can be a partially aromatic polyamide, for example poly m-xylylene adipamide
(MXD6). MXD6 can also act as the active oxygen scavenging component in the presence of a transition metal salt, for example a cobalt salt. The partially aromatic polyamide also can act as a passive barrier to reduce the carbonation loss. Alternatively, the partially aromatic polyamide, or other high barrier polymer, can be used with a blend with other oxidizable compounds and polymers, and suitably a transition metal catalyst. If a shelf life of less than 6 months is required, a blend of a very active oxygen scavenger can be sufficient to prevent spoilage if it maintains a low level of oxygen for this shorter shelf life.

## Claims

1. A polyester monolayer bottle for use in filling of a carbonated pasteurized product comprising
- greater than 4 wt. % poly (meta-xylyleneadipamide), wherein the poly (meta-xylyleneadamide is both an oxygen scavenging component and a passive component,
- at least one ionic compatibilizer comprising a copolyester containing a metal sulfoisophthalic acid group
- and a transition metal catalyst,
wherein the oxygen scavenging component limits oxygen ingress to 1 ppm or less when measured six months after filling, and the passive component limits the carbonation loss to less than 25% when measured six months after filing.

2. The bottle of claim 1 wherein the oxygen ingress is about 0.02 ppm or less when measured one month after filling measured with an optical-chemical sensor (PreSens OXYSens) fitted to the bottle.

3. A method comprising: forming a polyester monolayer bottle comprising greater than 4 wt. % poly (meta- xylyleneadipamide), wherein the poly (meta-xylyleneadipamide is both an oxygen scavenging component and a passive component, at least one ionic compatibilizer comprising a copolyester containing a metal sulfoisophthalic acid group, and a transition metal catalyst and filling the polyester bottle with a carbonated pasteurized product, wherein the oxygen scavenging component limits oxygen ingress to 1 ppm or less when measured six months after filling, and the passive component limits the carbonation loss to less than 25% when measured six months after filing.

4. The method of claim 3 wherein the oxygen ingress is about 0.02 ppm or less when measured one month after filling measured with an optical-chemical sensor (PreSens OXYSens) fitted to the bottle.

5. The method of claim 3 wherein the carbonated pasteurized product is selected from the group consisting of juice and beer.

## Patentansprüche

1. Polyester-Monolayer-Flasche zur Verwendung beim Einfüllen eines mit Kohlensäure versetzten pasteurisierten Produkts, umfassend:
- mehr als 4 Gew.-% Poly-meta-xylylenadipamid, wobei das Poly-meta-xylylenadipamid sowohl eine Sauerstofffängerkomponente als auch eine passive Komponente ist;
- wenigstens einen ionischen Verträglichkeitsvermittler, der einen Copolyester umfasst, welcher eine Metallsulfoisophthalsäure-Gruppe enthält;
- und einen Übergangsmetallkatalysator;
wobei die Sauerstofffängerkomponente die Menge des eingedrungenen Sauerstoffs auf 1 ppm oder weniger beschränkt, wenn sechs Monate nach dem Einfüllen gemessen wird, und die passive Komponente den Kohlensäureverlust auf weniger als 25% beschränkt, wenn sechs Monate nach dem Einfüllen gemessen wird.

2. Flasche gemäß Anspruch 1, wobei die Menge des eingedrungenen Sauerstoffs etwa 0,02 ppm oder weniger beträgt, wenn einen Monat nach dem Einfüllen gemessen wird und mit einem an die Flasche montierten optisch-chemischen Sensor (PreSens OXYSens) gemessen wird.

3. Verfahren, umfassend: das Bilden einer Polyester-Monolayer-Flasche, die mehr als 4 Gew.-% Poly-meta-xylylenadipamid, wobei das Poly-meta-xylylenadipamid sowohl eine Sauerstofffängerkomponente als auch eine passive Komponente ist, wenigstens einen ionischen Verträglichkeitsvermittler, der einen Copolyester umfasst, welcher eine Metallsulfoisophthalsäure-Gruppe enthält, und einen Übergangsmetallkatalysator umfasst, und das Füllen der Polyesterflasche mit einem mit Kohlensäure versetzten pasteurisierten Produkt, wobei die Sauerstofffängerkomponente die Menge des eingedrungenen Sauerstoffs auf 1 ppm oder weniger beschränkt, wenn sechs Monate nach dem Einfüllen gemessen wird, und die passive Komponente den Kohlensäureverlust auf weniger als 25% beschränkt, wenn sechs Monate nach dem Einfüllen gemessen wird.

4. Verfahren gemäß Anspruch 3, wobei die Menge des eingedrungenen Sauerstoffs etwa 0,02 ppm oder weniger beträgt, wenn einen Monat nach dem Einfüllen gemessen wird und mit einem an die Flasche montierten optisch-chemischen Sensor (PreSens OXYSens) gemessen wird.

5. Verfahren gemäß Anspruch 3, wobei das mit Kohlensäure versetzte pasteurisierte Produkt aus der Gruppe ausgewählt ist, die aus Saft und Bier besteht.

## Revendications

1. Bouteille en polyester monocouche à utiliser pour être remplie avec un produit gazéifié pasteurisé, comprenant
- plus de 4 % en poids de poly-méta-xylylèneadipamide, dans laquelle ledit poly-méta-xylylèneadipamide est tant un composant piégeant l'oxygène qu'un composant passif,
- au moins un agent compatibilisant ionique comprenant un copolyester contenant un groupe acide sulfoisophtalique-métal,
- et un catalyseur à base de métal de transition,
dans laquelle ledit composant piégeant l'oxygène limite la pénétration d'oxygène à 1 ppm ou moins, lorsqu'on mesure six mois après le remplissage, et ledit composant passif limite la perte de gazéification à moins de 25 %, lorsqu'on mesure six mois après le remplissage.

2. Bouteille selon la revendication 1, dans laquelle la pénétration d'oxygène est environ 0,02 ppm ou moins, lorsqu'on mesure un mois après le remplissage et lorsqu'on mesure avec un capteur optico-chimique (PreSens OXYSens) monté sur la bouteille.

3. Procédé, comprenant les étapes consistant à former une bouteille en polyester monocouche comprenant plus de 4 % en poids de poly-méta-xylylèneadipamide, dans laquelle ledit poly-méta-xylylèneadipamide est tant un composant piégeant l'oxygène qu'un composant passif, au moins un agent compatibilisant ionique comprenant un copolyester contenant un groupe acide sulfoisophtalique-métal, et un catalyseur à base de métal de transition, et remplir ladite bouteille en polyester avec un produit gazéifié pasteurisé, dans lequel ledit composant piégeant l'oxygène limite la pénétration d'oxygène à 1 ppm ou moins, lorsqu'on mesure six mois après le remplissage, et ledit composant passif limite la perte de gazéification à moins de 25 %, lorsqu'on mesure six mois après le remplissage.

4. Procédé selon la revendication 3, dans lequel la pénétration d'oxygène est environ 0,02 ppm ou moins, lorsqu'on mesure un mois après le remplissage et lorsqu'on mesure avec un capteur optico-chimique (PreSens OXYSens) monté sur la bouteille.

5. Procédé selon la revendication 3, dans lequel ledit produit gazéifié pasteurisé est choisi dans le groupe consistant en jus et bière.
